# EUROPEAN PATENT SPECIFICATION

(11) **EP 1 354 663 B1**
(45) Date of publication and mention of the grant of the patent: **02.02.2005**
(21) Application number: 02076261.3
(22) Date of filing: 27.03.2002
(51) Int. Cl.: B23K 26/14

(54) **Nozzle for lasercutting**
Düse zum Laserschneiden
Buse pour le coupage au laser

(43) Date of publication of application: 22.10.2003
(73) Proprietor: LVD Company NV, 8560 Gullegem (BE)
(72) Inventor: Serruys, Wim, 8560 Gullegem (BE)
(74) Representative: Ostyn, Frans

(56) References cited:
- US-A- 4 227 582
- US-A- 5 220 149
- US-B1- 6 288 363
- PATENT ABSTRACTS OF JAPAN vol. 2000, no. 07, 29 September 2000 (2000-09-29) & JP 2000 107879 A (AMADA CO LTD), 18 April 2000 (2000-04-18)

## Description

The invention relates to a nozzle for lasercutting by means of a focussed laser beam and a cutting gas, according to preamble of claim 1. Such a nozzle is disclosed in US 5 220 149 A (see infra).

In lasercutting, the focussed laser beam together with the cutting gas passes through a nozzle to the workpiece. Until now, such a nozzle is constructed as a copper piece in which internally first of all a conical tapering is provided which transfers into a cilindrical tapering. The diameter of the cilindrical tapering is dependent of the material that has to be cutted. Thick materials are cutted with a big diameter while thin materials are cut with a small diameter.

For example, in JP2000107879A, a device is described to cut a thick steel plate with laser beams. The laser nozzle is provided with a tapered opening part, the straight part having the small diameter through which the laser beams are multiply reflected, and an irradiating port side tapered part the nozzle irradiating port side of which becomes large in diameter gradually so that the diameter of a nozzle irradiating port becomes larger than the diameter of the above described straight part.

In US5220149A, a laser nozzle is described which has an inner end adapted to be secured to a laser head and an outer end to be disposed adjacent a workpiece. An axial bore extends longitudinally therethrough with an inlet end and an outlet end and provides a passage therethrough for the laser beam and a cutting gas. The bore narrows at a point along its length spaced from the outlet end to define a throat portion in the bore, and at least one auxiliary rectilinear passage extending from the throat portion to the outer end of the nozzle adjacent the outlet end of the bore for passage of cutting gas therethrough. The nozzle, or the cutting head and nozzle, may be rotated to locate the auxiliary passage in a position trailing the laser beam. In another embodiment, a multiplicity of circumferentially spaced auxiliary passages may be opened or closed by a regulator to provide flow of cutting gas through passages which trial the laser beam.

The disadvantage of the known nozzles for lasercutting of thick material by means of a focussed laser beam and a cutting gas is that for the piercing operation for making a hole prior to the laser cutting of the material, a high gas pressure is required in comparison with the cutting itself. Furthermore, the piercing operation has a better performance with a nozzle with a small diameter. Accordingly, the cutting of thick materials give problems because of the fact that the cutting of material with a big diameter is more efficient with nozzles with a greater diameter, while for the piercing of the starting hole a nozzle with a smaller diameter is required.

The purpose of the invention is to provide a nozzle for lasercutting by means of a focussed laser beam and a cutting gas which doesn't show the abovementioned disadvantages.

This purpose is achieved by providing a nozzle for lasercutting by means of a focussed laser beam and a cutting gas, according to claim 1.

This has the advantage that with the cutting of thick material only one nozzle has to be provided to make the piercing hole as well as to cut the material.

In a preferred embodiment of a nozzle according to the invention, the nozzle comprises two mutually movable elements, a first element which is the periphery of the nozzle and a second element within the periphery of the nozzle, in which the aperture has the smaller diameter in a first position in which the lower part of said second element is in contact with said first element, and in which the aperture has the greater diameter in a second position in which the lower part of said second element has no contact with said first element.

In a more preferred embodiment of a nozzle according the invention, a coil spring is provided around said second element to place the second element into said first and second position.

in a specific embodiment of a nozzle according the invention, said second element is provided of two sets of gas openings, a first small gas opening around the center of the second element through which in said first position gas with the greater pressure flows, and a second set of relative smaller openings in the circumference of the second element through which next to the first small gas opening in said second position gas with the lower pressure flows.

Preferably, a nozzle according to the invention has an aperture with a diameter between 0,8 and 5 mm.

More preferably, the gas pressure of the cutting gas in a nozzle according the invention varies between 0,2 and 20 bar.

This invention will be further explained in the following non-restricting description of a preferred embodiment of a nozzle for lasercutting by means of a focussed laser beam and a cutting gas according to the invention.

In this description, reference is made to the attached figure by means of reference numbers, in which:
- ***figure 1*** is a cross sectional view of a nozzle of the state of the art;
- ***figure 2a*** is a cross sectional view of a nozzle according to the invention in a first position in which gas with the lower pressure flows;
- ***figure 2b*** is a cross sectional view of a nozzle according to the invention in a second position in which gas with the higher pressure flows.

Until now, a nozzle (1) for lasercutting of the state of the art is constructed as a copper piece (2) through which a cutting gas and a laser beam (not shown in the figure) passes. In said copper piece (2), first of all a conical tapering (3) is provided which transfers into a cylindrical tapering (4). In the cylindrical tapering (4) an aperture (5) is provided. The diameter of the aperture (5) can vary between 0,8 mm up to 5 mm, dependent on the material that has to be cut.

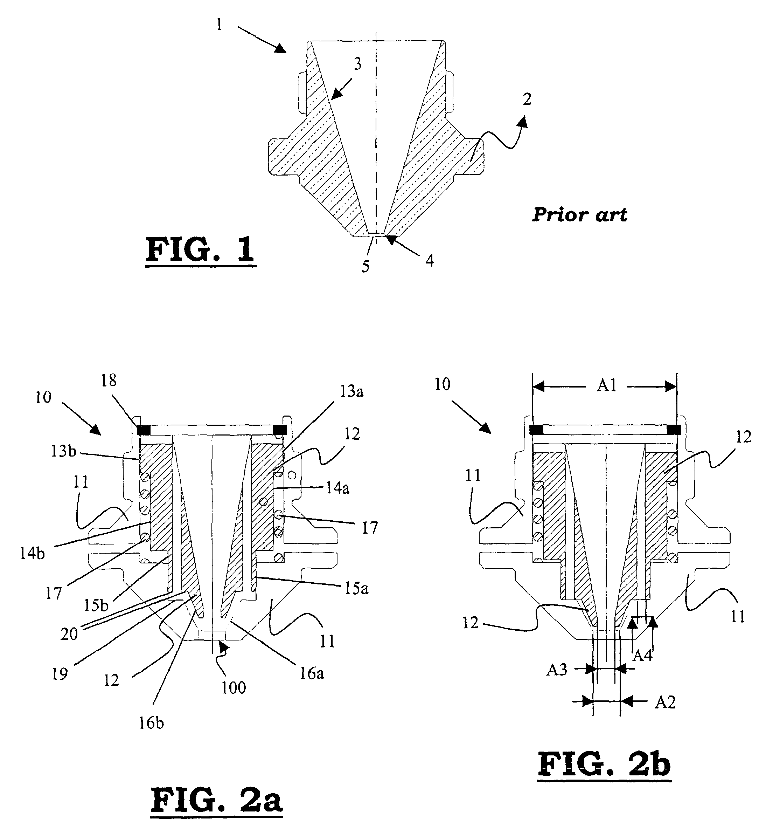

A nozzle (10) for lasercutting according to the invention, as is shown in figures 2a and 2b, comprises two mutually movable elements, a first element which is the periphery (11) of the nozzle (10) and a second element within the periphery (11) of the nozzle (10), further called the inner part (12). At the top of the periphery (11) of the nozzle (10) a first aperture (A1) is provided and at the bottom a relative large second aperture (A2) functioning as an exhaust is provided. The periphery (11) has a step-by-step decreasing diameter comprising a first diameter (13a), a second diameter (14a), a third diameter (15a) and a fourth gradually decreasing diameter (16a). The inner part (12) has a corresponding step-by-step decreasing diameter also comprising a first diameter (13b), a second diameter (14b), a third diameter (15b) and fourth gradually decreasing diameter (16b). The two first diameters (13a, 13b) and the two third diameters (15a, 15b) have such dimensions that there the inner part (12) can slide in the periphery (11).

Around the inner part (12) a coil spring (17) is provided which pushes the top of the inner part (12) against an upper stop element (18) provided in the periphery (11) which attends to the limiting of the upward movement of the inner part (12) within the periphery (11). The downward movement of the inner part (12) within the periphery (11) is limited because of the fact that the inner part (12) bumps against a lower stop element (19) provided n the periphery (11) such that the inner part (12) comes in contact with the periphery (11).

For the lasercutting a cutting gas and a focussed laser beam passes through the periphery (11) and the inner part (12) of the nozzle (10). Therefore, the inner part (12) is provided with two sets of gas openings, a first small gas opening (A3) around the center of the inner part (12) and a second set of relative smaller openings (A4) in the circumference of the inner part (12).

When a gas pressure (P) is laid on, three forces exert on the inner part (12):
- a first upward force which is the spring force which pushes the inner part (12) against the upper stop element (18);
- a second upward force (A2 x P) which also pushes the inner part (12) up;
- a third downward force (A1 x P) which pushes the inner part (12) down in the periphery (11).

When the gas pressure is high enough, the resultant of the forces will be a downward force because of the fact that the first aperture (A1) is larger than the second aperture (A2), through which the inner part (12) will slide down in the periphery (11) until the lower part (20) of the inner part (12) bumps against the lower stop element (19) provided within the periphery (11) such that the inner part (12) comes in contact with the periphery (11). Through that, the smaller openings (A4) in the circumference of the inner part (12) are closed off through which the cutting gas only flows through the first small gas opening (A3).

So, when a low gas pressure is laid on, the resultant of the three forces will be such that the inner part (12) will remain at the top of the periphery (11) through which the cutting gas will flow through the first small gas opening (A3) around the center of the inner part (12) and the second set of relative smaller openings (A4) in the circumference of the inner part (12). When a high gas pressure is laid on, the resultant of the three forces will be such that the inner part (12) will slide down in the periphery (11) through which the cutting gas will only flow through the the first small gas opening (A3).

In this way, a nozzle (10) for lasercutting by means of a focussed laser beam and a cutting gas with an aperture (100) which is adjustable through the gas pressure of the cutting gas in the nozzle (10) is obtained.

The gas pressure of the cutting gas in the nozzle (10) varies between 0,2 and 20 bar and the diameter of the adjustable aperture (100) varies between 0,8 and 5 mm.

The lower gas pressurc is used for cutting of a material, f.i. a metal plate, while the high gas pressure is used for the piercing of the starting hole in the material prior to the cutting of the material, which is especially required with the lasercutting of thick materials.

## Claims

1. Nozzle for lasercutting by means of a focussed laser beam and a cutting gas, **in** which the nozzle (10) has an adjustable aperture (100), **characterised in that** said aperture (100) is adjustable through the gas pressure of the cutting gas in the nozzle (10).

2. Nozzle according to claim 1, **characterised in that** the nozzle (10) comprises two mutually movable elements, a first element which is the periphery (11) of the nozzle (10) and a second element (12) within the periphery (11) of the nozzle (10), in which the aperture (100) has the smaller diameter in a first position in which the lower part (20) of said second element (12) is in contact with said first element (11), and in which the aperture (100) has the greater diameter in a second position in which the lower part (20) of said second element (12) has no contact with said first element (11).

3. Nozzle according to claim 2, **characterised in that** a coil spring (17) is provided around said second element (12) to place the second element (12) into said first and second position.

4. Nozzle according to claim 2 or 3, **characterised in that** said second element (12) is provided with two sets of gas openings, a first small gas opening (A3) around the center of the second element (12) through which in said first position gas with the greater pressure flows, and a second set of relative smaller openings (A4) in the circumference of the second element (12) through which next to the first small gas (A3) opening in said second position gas with the lower pressure flows.

5. Nozzle according to any one of the preceding claims, **characterised in that** the nozzle (10) has an aperture (100) with a diameter between 0,8 and 5 mm.

6. Nozzle according to any one of claims 1 up to and including 5, **characterised in that** the gas pressure of the cutting gas in the nozzle (10) varies between 0,2 and 20 bar.

## Patentansprüche

1. Düse für das Laserschneiden mittels eines fokussierten Laserstrahls und eines Schneidgases, bei der die Düse (10) eine einstellbare Öffnung (100) aufweist, **dadurch gekennzeichnet, dass** die Öffnung (100) durch den Gasdruck des Scheidgases in der Düse (10) verstellbar ist.

2. Düse nach Anspruch 1, **dadurch gekennzeichnet, dass** die Düse (10) zwei gegenseitig bewegliche Elemente umfasst, nämlich ein erstes Element, das die Peripherie (11) der Düse (10) darstellt und ein zweites Element (12) innerhalb der Peripherie (11) der Düse (10), wobei die Öffnung (100) in einer ersten Position, in welcher der untere Teil (20) des besagten zweiten Elementes (12) mit dem besagten ersten Element (11) in Kontakt ist, einen kleineren Durchmesser aufweist und in einer zweiten Position, in welcher der untere Teil (20) des besagten zweiten Elementes (12) nicht mit dem ersten Element (11) in Kontakt ist, einen größeren Durchmesser aufweist.

3. Düse nach Anspruch 2, **dadurch gekennzeichnet, dass** eine Spiralfeder (17) um das zweite Element (12) herum angeordnet ist, um dieses zweite Element (12) in der besagten ersten und zweiten Position anzuordnen.

4. Düse nach Anspruch 2 oder 3, **dadurch gekennzeichnet, dass** das zweite Element (12) mit zwei Sätzen von Gasöffnungen versehen ist, nämlich einer ersten kleinen Gasöffnung (A3) um das Zentrum des zweiten Elementes (12) herum, durch welche in der besagten ersten Position Gas mit einem größerem Druck strömt, und ein zweiter Satz aus relativ kleineren Öffnungen (A4) im Umfang des zweiten Elementes (12), durch welche, neben der ersten kleinen Gasöffnung (A3), in der besagten zweiten Position Gas mit niedrigerem Druck fließt.

5. Düse nach einem der vorhergehenden Ansprüche, **dadurch gekennzeichnet, dass** die Düse (10) eine Öffnung (100) mit einem Durchmesser zwischen 0,8 und 5 mm aufweist.

6. Düse nach einem der Ansprüche 1 bis 5, **dadurch gekennzeichnet, dass** der Gasdruck des Schneidgases in der Düse (10) zwischen 0.2 und 20 bar variiert.

## Revendications

1. Tuyère pour découpage au laser au moyen d'un faisceau laser focalisé et d'un gaz de coupe, dans laquelle la tuyère (10) comporte une ouverture réglable (100), **caractérisée en ce que** ladite ouverture (100) est réglable par l'intermédiaire de la pression de gaz du gaz de coupe dans la tuyère (10).

2. Tuyère suivant la revendication 1, **caractérisée en ce que** la tuyère (10) comprend deux éléments mutuellement mobiles, un premier élément qui est la périphérie (11) de la tuyère (10), et un deuxième élément (12) à l'intérieur de la périphérie (11) de la tuyère (10), dans laquelle l'ouverture (100) présente son plus petit diamètre dans une première position dans laquelle la partie inférieure (20) dudit deuxième élément (12) est en contact avec ledit premier élément (11), et dans laquelle l'ouverture (100) présente son plus grand diamètre dans une deuxième position dans laquelle la partie inférieure (20) dudit deuxième élément (12) n'est pas en contact avec ledit premier élément (11).

3. Tuyère suivant la revendication 1, **caractérisée en ce qu'**un ressort hélicoïdal (17) est prévu autour dudit deuxième élément (12) afin de placer le deuxième élément (12) dans lesdites première et deuxième positions.

4. Tuyère suivant la revendication 2 ou 3, **caractérisée en ce que** ledit deuxième élément (12) est pourvu de deux ensembles d'ouvertures de gaz, une première petite ouverture de gaz (A3) étant située autour du centre du deuxième élément (12), à travers laquelle s'écoule le gaz présentant la pression plus élevée, dans ladite première position, et un deuxième ensemble d'ouvertures relatives plus petites (A4) dans la circonférence du deuxième élément (12), à travers lesquelles s'écoule le gaz présentant la pression plus basse, après la première petite ouverture de gaz (A3), dans ladite deuxième position.

5. Tuyère suivant l'une quelconque des revendications précédentes, **caractérisée en ce que** la tuyère (10) comporte une ouverture (100) dont le diamètre est compris entre 0,8 et 5 mm.

6. Tuyère suivant l'une quelconque des revendications 1 à 5 incluse, **caractérisée en ce que** la pression de gaz du gaz de coupe dans la tuyère (10) varie entre 0,2 et 20 bars.
